# EUROPÄISCHE PATENTSCHRIFT

(11) **EP 3 874 233 B1**
(45) Veröffentlichungstag und Bekanntmachung des Hinweises auf die Patenterteilung: **07.12.2022**
(21) Anmeldenummer: 19782563.1
(22) Anmeldetag: 01.10.2019
(51) Int. Cl.: G01D 5/20

(54) **BEWEGUNGSVORRICHTUNG MIT POSITIONSBESTIMMUNGSSYSTEM**
MOVEMENT DEVICE HAVING A POSITION DETERMINATION SYSTEM
DISPOSITIF DE DÉPLACEMENT POURVU D'UN SYSTÈME DE DÉTERMINATION DE POSITION

(30) Priorität: 31.10.2018 DE 102018218666
(43) Veröffentlichungstag der Anmeldung: 08.09.2021
(73) Patentinhaber: Robert Bosch GmbH, 70442 Stuttgart (DE)
(72) Erfinder: OSHINUBI, Dayo, 71277 Rutesheim (DE); FRANGEN, Joachim, 74081 Heilbronn (DE); SEIZ, Daniel, 71106 Magstadt (DE)
(86) Internationale Anmeldenummer: PCT/EP2019/076535
(87) Internationale Veröffentlichungsnummer: WO 2020/088869

(56) Entgegenhaltungen:
- WO-A1-2015/017933
- DE-A1- 19 929 931
- DE-U1-202013 003 656
- GB-A- 2 103 943
- JP-A- H08 136 211

## Beschreibung

Die Erfindung betrifft eine Bewegungsvorrichtung gemäß dem Oberbegriff von Anspruch 1 und jeweils ein Verfahren zum Betrieb der ersten bzw. der zweiten Baugruppe gemäß den Ansprüchen 10 und 12.

Aus der US 6 615 155 B2 ist ein Positionsbestimmungssystem bekannt, welches eine statische erste Baugruppe und eine bewegliche zweite Baugruppe aufweist. In der ersten Baugruppe kann eine Vielzahl von planaren Spulen angeordnet sein, welche jeweils ein erstes Feldwechselwirkungsmittel bilden. In der zweiten Baugruppe sind demgegenüber drei zylindrische Spulen angeordnet, die paarweise orthogonal zueinander angeordnet sind. Diese bilden jeweils ein zweites Feldwechselwirkungsmittel. Dieses Positionsbestimmungssystem ermöglicht eine Positionsbestimmung in sechs räumlichen Freiheitsgraden. Es lässt vergleichsweise große Distanzen zwischen den ersten und den zweiten Feldwechselwirkungsmitteln zu. Ein Vorläufersystem ist aus der EP 922 966 B1 bekannt, dieses macht sich gerade die große Entfernung zwischen Sender und Empfänger zunutze, um eine aufwändige iterative Positionsberechnung zu vermeiden. Im Rahmen der vorliegenden Erfindung wird bewusst von dieser Vereinfachung abgewichen, wobei die Positionsberechnung wegen der erfindungsgemäß vorgeschlagenen Ausführung des Systems dennoch mit heute verfügbaren Mikrocontrollern durchführbar ist.

Aus der DE 10 2016 224 951 A1 ist eine Bewegungsvorrichtung bekannt, bei der eine zweite Baugruppe allein durch Verwendung von permanentmagnetischen Kräften gegenüber einer ersten Baugruppe frei in der Schwebe gehalten wird. Bei dieser Bewegungsvorrichtung kann der Abstand zwischen erster und zweiter Baugruppe nicht beliebig groß gemacht werden, da die Magnetkräfte mit zunehmendem Abstand sehr schnell abfallen. Diese Bewegungsvorrichtung benötigt typischerweise ein Positionsbestimmungssystem, mit dem eine Positionsbestimmung in sechs räumlichen Freiheitsgraden möglich ist.

Aus der JP 8-136211 A ist ein Drehgeber bekannt, der mehrere planare Feldwechselwirkungsmittel in Form von Spulen verwendet. Dieser Drehgeber ermöglich jedoch nur eine Positionsbestimmung hinsichtlich eines einzigen Drehfreiheitsgrades

Ein Vorteil der vorliegenden Erfindung besteht darin, dass das entsprechende Positionsbestimmungssystem besonders gut für die Verwendung in einer Bewegungsvorrichtung gemäß der DE 10 2016 224 951 A1 geeignet ist, wobei es insbesondere durch deren Magnetfelder nicht gestört wird. Die verwendeten Felderzeugungsmittel lassen sich besonders einfach und kostengünstig herstellen, wobei sie insbesondere in Form von Printed Circuit Boards (PCB) bzw. von Leiterplatten ausgeführt werden können. Das Positionsbestimmungssystem hat eine hohe räumliche Auflösung und Genauigkeit, beispielsweise besser als 10 µm, eine kurze Messdauer, die beispielsweise eine Messfolgefrequenz im Bereich von 1 kHz bis 100 kHz ermöglicht und eine geringe Latenzzeit, beispielsweise im Bereich von 1 ms bis 10 µs. Es ermöglicht eine Positionsbestimmung in sechs räumlichen Freiheitsgraden, beispielsweise drei kartesischen Ortskoordinaten und drei Euler-Winkeln. Darüber hinaus ist eine Bestimmung der absoluten Position möglich, insbesondere unmittelbar nach der Inbetriebnahme der Bewegungsvorrichtung, ohne dass diese hierfür bewegt werden muss. Es können mehrere bewegliche Baugruppen vorgesehen sein, deren Position gleichzeitig bestimmt werden kann. Dabei ist es sogar möglich, die beweglichen Baugruppen über Gelenke u.ä. miteinander zu koppeln, wobei dennoch die Position einer jeder dieser beweglichen Baugruppen bestimmbar ist. Zwischen den beiden Baugruppen ist keinerlei Kabelverbindung erforderlich, so dass die bewegte Baugruppe insbesondere frei schweben kann.

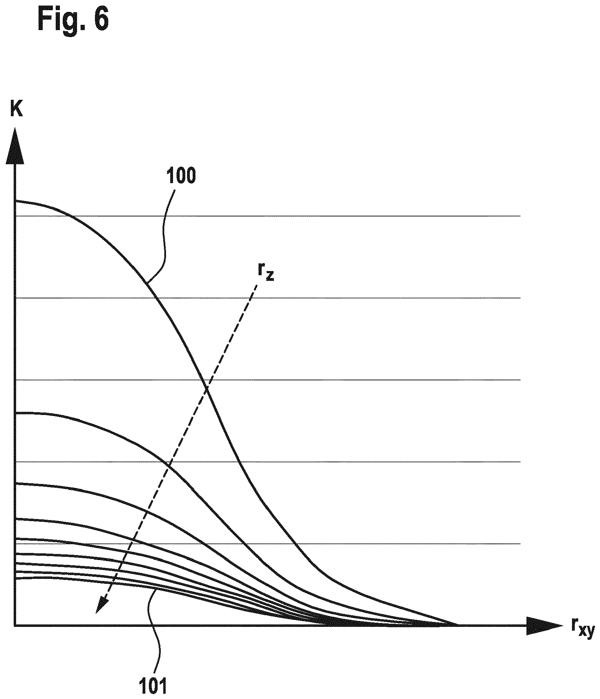

Gemäß Anspruch 1 wird vorgeschlagen, dass die zweiten Feldwechselwirkungsmittel jeweils planar ausgeführt sind, wobei sie flächig verteilt über die zweite Bewegungsoberfläche und parallel zu dieser angeordnet sind, wobei sie jeweils eine zweite Wechselwirkungsfläche definieren. Bei dieser Anordnung der zweiten Feldwechselwirkungsmittel wird ausgenutzt, dass bei der Bewegungsvorrichtung gemäß der DE 10 2016 224 951 A1 der Abstand zwischen erster und zweiter Baugruppe typischerweise klein ist. Dies führt dazu, dass eine Verkippung der zweiten Baugruppe relativ zur ersten Baugruppe typischerweise ebenfalls klein ist. In der Folge folgt die elektromagnetische Kopplung zwischen einem jedem Paar aus einem ersten und einem zweiten Feldwechselwirkungsmittel einem vergleichsweise einfachen Gesetz, das unten mit Bezug auf Fig. 6 näher erläutert wird. Wenn genügend entsprechende Paare vorliegen, bei denen eine starke Kopplung vorhanden ist, lässt sich aus den gemessenen Kopplungen und der genannten Gesetzmäßigkeit für die einzelne Kopplung die gewünschte Relativposition zwischen erster und zweiter Baugruppe berechnen, indem das entsprechende nichtlineare Gleichungssystem gelöst wird. Hierbei kommen vorzugsweise iterative Lösungsverfahren zum Einsatz, wie beispielsweise das Gradientenverfahren (https://de.wikipedia.org/wiki/Gradientenverfahren).

Unter einer flächigen Verteilung soll eine Verteilung verstanden werden, die von zwei orthogonalen Achsen aufgespannt wird, wobei die genannte Verteilung unregelmäßig sein kann.

Die Bewegungsvorrichtung kann eine einzige erste Baugruppe und wenigstens eine, vorzugsweise mehrere, zweite Baugruppe umfassen, wobei die erste Baugruppe, insbesondere die erste Basis, im Sinne eines Stators ortsfest angeordnet ist, während die wenigstens eine zweite Baugruppe jeweils beweglich gegenüber der ersten Baugruppe ist, so dass sie beispielsweise als Werkstückträger bzw. als Transportkörper nutzbar ist. Die Bewegungsvorrichtung kann wenigstens eine, vorzugsweise mehrere, erste Baugruppen und eine einzige zweite Baugruppe umfassen, wobei die zweite Baugruppe, insbesondere die zweite Basis, im Sinne eines Stators ortsfest angeordnet ist, während die wenigstens eine erste Baugruppe jeweils beweglich relativ zur zweiten Baugruppe ist, so dass sie beispielsweise als Werkstückträger bzw. als Transportkörper nutzbar ist. Die vom Stator verschiedene Baugruppe bzw. der Werkstückträger ist vorzugsweise mit Abstand zum Stator bzw. frei schwebend bewegbar. Die Bewegungsoberfläche derjenigen Baugruppe, die den Stator bildet, ist vorzugsweise erheblich größer als die Bewegungsoberfläche der anderen Baugruppen, so dass letztgenannte Baugruppe einen großen Bewegungsbereich hat.

Die erste und/oder die zweite Bewegungsoberfläche ist vorzugsweise eben, wobei sie auch gekrümmt im Raum verlaufen kann. Die entsprechenden Krümmungsradien sind vorzugsweise groß gegenüber den Wechselwirkungsflächen. Zwischen der ersten und der zweiten Bewegungsoberfläche befindet sich vorzugsweise nur Luft oder Vakuum, wobei es möglich ist, dass die erste und zweite Bewegungsoberfläche zumindest zweitweise unmittelbar aneinander anliegen. Im Betrieb sind die erste und die zweite Bewegungsoberfläche vorzugsweise mit geringem Abstand zueinander angeordnet, wobei die bewegliche Baugruppe höchst vorzugsweise frei schwebt.

Das erste und/oder das zweite Feldwechselwirkungsmittel ist vorzugsweise entweder eine planare Spule oder eine, insbesondere ebene, Kondensatorplatte. Die entsprechende Wechselwirkung umfasst das Erzeugen bzw. das Aussenden eines Feldes, indem die Spule mit einem Strom beaufschlagt wird (induktives Wirkprinzip) oder indem an die Kondensatorplatte eine Spannung angelegt wird (kapazitives Wirkprinzip). Die Wechselwirkung umfasst die Sensierung bzw. den Empfang des von einem, ersten oder zweiten, Feldwechselwirkungsmittel erzeugten Feldes mit dem anderen, zweiten oder ersten, Feldwechselwirkungsmittel, indem der in Spule induzierte Strom bzw. der an der Kondensatorplatte hervorgerufene Verschiebestrom gemessen wird. Bei dem Feld handelt es sich entweder um ein magnetisches oder um ein elektrisches Feld. Vorzugsweise kommen Wechselfelder zum Einsatz, welche eine vorgegebene Frequenz haben. Die Frequenz liegt vorzugsweise in einem sog. ISM-Band (https://de.wikipedia.org/wiki/ISM-Band), welches für die vorliegende Anwendung zugelassen ist. Sie kann beispielsweise zwischen 1 MHz und 50 MHz betragen. Die ersten und/oder die zweiten Wechselwirkungsflächen, insbesondere deren größte Querabmessungen, sind vorzugsweise gegenüber der gewählten Frequenz zugeordneten Wellenlänge klein ausgeführt, so dass im Rahmen der Positionsberechnung Hochfrequenzeffekte außer Acht bleiben können.

Die Wechselwirkungsfläche ist entweder die Fläche, die von der Spule umgrenzt wird oder die felderzeugende Oberfläche der Kondensatorplatte. Im Falle einer Spule ist vorzugsweise die radial am weitesten außen gelegene Windung maßgeblich.

In den abhängigen Ansprüchen sind vorteilhafte Weiterbildungen und Verbesserungen der Erfindung angegeben.

Es kann vorgesehen sein, dass die ersten und die zweiten Feldwechselwirkungsmittel von planaren Spulen gebildet werden. Bei dem ebenfalls denkbaren kapazitiven Wirkprinzip ist es zwecks Vermeidung von elektromagnetischen Störungen nahezu zwingend erforderlich, die bewegliche Baugruppe zu erden. Hierfür wäre eine Kabelverbindung zur unbeweglichen Baugruppe erforderlich. Im Rahmen der vorliegenden Erfindung ist es aber erwünscht, dass die bewegliche Baugruppe frei schwebt, so dass diese Kabelverbindung stört. Bei dem vorgeschlagenen induktiven Wirkprinzip ist kein derartiges Erdungskabel erforderlich. Beim kapazitiven Wirkprinzip werden die ersten und die zweiten Feldwechselwirkungsmittel jeweils von einer Kondensatorplatte gebildet, die vorzugsweise kreisrund ausgebildet ist. Die Kondensatorplatte wird vorzugsweise von einer Leiterplatte gebildet, wie dies weiter unten in analoger Weise für die planaren Spulen beschrieben ist.

Es kann vorgesehen sein, dass die ersten und die zweiten Wechselwirkungsflächen so angeordnet sind, dass in jeder Relativstellung zwischen einer ersten und einer zweiten Baugruppe, in welcher die zweite Bewegungsoberfläche unmittelbar an der ersten Bewegungsoberfläche anliegt, wenigstens sechs Paare, vorzugsweise wenigstens acht Paare, von sich zumindest teilweise überlappenden ersten und zweiten Wechselwirkungsflächen vorhanden sind, wobei für jedes dieser Paare die entsprechende Kopplung messbar ist. Unmittelbar benachbarte erste bzw. zweite Wechselwirkungsflächen sind vorzugsweise mit geringem Abstand zueinander angeordnet. Es ist denkbar, dass sich die ersten bzw. zweiten Wechselwirkungsflächen jeweils untereinander überlappen, insbesondere beim bevorzugten induktiven Wirkprinzip. Die entsprechenden planaren Spulen sind dann vorzugsweise in unterschiedlichen elektrisch voneinander isolierten Schichten angeordnet, wobei die Schichten höchst vorzugsweise von einer gemeinsamen Leiterplatte gebildet werden. Bei der in den Figuren dargestellten, bevorzugten Ausführungsform sind die ersten und die zweiten Wechselwirkungsflächen untereinander jeweils überlappungsfrei, wobei sie vorzugsweise einen geringen Abstand zueinander aufweisen.

Es kann vorgesehen sein, dass die erste Baugruppe eine erste Basis und mehrere erste Permanentmagnetanordnungen umfasst, wobei die ersten Permanentmagnetanordnungen über einen jeweils zugeordneten Aktuator mit der ersten Basis derart verbunden sind, dass sie jeweils als Ganzes in wenigstens einem Freiheitsgrad mittels des jeweils zugeordneten Aktuators bewegbar relativ zur ersten Basis sind, wobei die zweite Baugruppe eine zweite Basis und eine zweite Permanentmagnetanordnung umfasst, wobei die zweite Permanentmagnetanordnung ortsfest relativ zur zweiten Basis angeordnet ist. Eine Permanentmagnetanordnung umfasst vorzugsweise wenigstens zwei magnetische Dipole, die jeweils paarweise mit festem Abstand und mit fester Drehlage relativ zueinander angeordnet sind. Dabei versteht es sich, dass ein idealer magnetischer Dipol technisch nur annäherungsweise realisierbar ist. Die Aktuatoren haben vorzugsweise jeweils einen einzigen Freiheitsgrad, höchst vorzugsweise einen endlosen Drehfreiheitsgrad. Die Aktuatoren sind vorzugsweise als Elektromotoren ausgeführt, höchst vorzugsweise als bürstenlose Gleichstrommotoren.

Das erfindungsgemäße Positionsbestimmungssystem ist besonders gut für die Nutzung mit diesem Antriebssystem geeignet. Die ersten Permanentmagnetanordnungen haben zwar ein sehr starkes Magnetfeld. Dieses ändert sich aber im Vergleich zur Betriebsfrequenz der ersten und zweiten Feldwechselwirkungsmittel nur sehr langsam, wobei die äquivalente Frequenz beispielsweise kleiner als 1 kHz ist. Die durch das vorgeschlagene Antriebssystem im Positionsbestimmungssystem verursachten Störungen lassen sich somit durch Hochpassfilterung sehr leicht eliminieren. Bei dieser Ausführungsform ist die erste Baugruppe vorzugsweise ein einziges Mal vorhanden, wobei die zweite Baugruppe mehrfach vorhanden sein kann.

Es kann vorgesehen sein, dass die ersten und/oder die zweiten Wechselwirkungsflächen kreisförmig ausgebildet sind. Vorzugsweise sind alle ersten und zweiten Wechselwirkungsflächen kreisförmig ausgebildet. Nur mit dieser Gestaltung der ersten und zweiten Wechselwirkungsflächen ergibt sich die mit Bezug auf Fig. 6 erläuterte besonders einfache Gesetzmäßigkeit. Bei allen anderen Formen müssten auch die relative Drehlage und vieles mehr berücksichtigt werden. Sofern die ersten bzw. zweiten Feldwechselwirkungsmittel von planaren Spulen gebildet werden, verlaufen deren einzelne Windungen vorzugsweise über wenigstens 340° ihres jeweiligen Umfangs kreisförmig, so dass sich eine hohe Rotationssymmetrie der Spule ergibt. Im verbleibenden Umfangsbereich findet vorzugsweise der Wechsel zwischen benachbarten, konzentrischen Windungen oder eine Durchkontaktierung zu einer weiteren Windungslage statt. Sofern die ersten bzw. zweiten Feldwechselwirkungsmittel von Kondensatorplatten gebildet werden, sind diese vorzugsweise kreisförmig ausgebildet.

Es ist vorgesehen, dass die erste Baugruppe unbeweglich ist, wobei die zweiten Wechselwirkungsflächen größer als die ersten Wechselwirkungsflächen ausgebildet sind. Damit sind an der beweglichen zweiten Baugruppe besonders wenige zweite Feldwechselwirkungsmittel erforderlich. Hierdurch verringert sich die Aufbaukomplexität der zweiten Baugruppe, die vorzugsweise drahtlos mit Energie versorgt wird. Weiter kann die Zeitdauer einer einzelnen Messung verringert werden, so dass eine hohe Messfrequenz möglich ist.

Es kann vorgesehen sein, dass die ersten Feldwechselwirkungsmittel untereinander identisch ausgebildet sind, wobei sie gemäß einem quadratischen oder einem hexagonalen Raster verteilt angeordnet sind, wobei die zweiten Feldwechselwirkungsmittel untereinander identisch ausgebildet sind, wobei sie gemäß einem quadratischen oder einem hexagonalen Raster verteilt angeordnet sind. Es ist grundsätzlich denkbar, eine beliebig komplexe Anordnung der ersten und zweiten Feldwechselwirkungsmittel zu wählen, die keinerlei Raster folgt. Entscheidend für die Positionsberechnung ist, dass die Anordnung der ersten und der zweiten Wechselwirkungsflächen bekannt ist. Mit der vorgeschlagenen Anordnung ergibt sich jedoch eine deutliche Vereinfachung der Positionsbestimmung. Darüber hinaus lässt sich insbesondere die als Stator verwendete Baugruppe problemlos in rechteckige bzw. sechseckige Unterbaugruppen zerlegen, die untereinander im Wesentlichen identisch ausgeführt sind.

Es kann vorgesehen sein, dass die erste Baugruppe wenigstens einen ersten Signalgenerator, wenigstens eine erste Signalauswerteeinheit und wenigstens einen ersten Multiplexer umfasst, wobei die ersten Feldwechselwirkungsmittel über einen zugeordneten ersten Multiplexer einzeln wahlweise entweder an einen zugeordneten ersten Signalgenerator oder eine zugeordnete erste Signalauswerteinheit anschließbar sind. Es können mehrere erste Signalauswerteeinheiten vorhanden sein. Im Rahmen der Messung der genannten Kopplungen ist es ohne Weiteres möglich, mehrere Kopplungen gleichzeitig zu messen, um die Messdauer zu verkürzen. Es versteht sich, dass die Verwendung weniger erster Signalauswerteeinheiten aus Kostengründen bevorzugt ist.

Es kann vorgesehen sein, dass die erste Baugruppe aus mehreren Unterbaugruppen zusammengesetzt ist, die jeweils einen Teil der ersten Bewegungsoberfläche mit den dortigen ersten Feldwechselwirkungsmitteln bilden, wobei jeder Unterbaugruppe ein erster Signalgenerator, wenigstens eine erste Signalauswerteinheit und ein erster Multiplexer zugeordnet ist. Die erste Signalauswerteeinheit und/oder der erste Signalgenerator können zumindest teilweise von einem ersten Mikrocontroller gebildet werden, welcher vorzugsweise Bestandteil der betreffenden Unterbaugruppe ist. Die ersten Mikrocontroller stehen vorzugsweise in Datenaustauschverbindung untereinander, beispielsweise über einen gemeinsamen Datenbus.

Es kann vorgesehen sein, dass die zweite Baugruppe jeweils einen zweiten Signalgenerator, eine zweite Signalauswerteeinheit und einen zweiten Multiplexer umfasst, wobei die zweiten Feldwechselwirkungsmittel über den zweiten Multiplexer einzeln wahlweise entweder an den zweiten Signalgenerator oder an die zweite Signalauswerteinheit anschließbar sind. Die zweite Signalauswerteeinheit dient in erster Linie dem Empfang des weiter unten erläuterten Messanforderungssignals. Es reicht aus, wenn diese einmal vorhanden ist. Gleiches gilt für den zweiten Signalgenerator, der in erster Linie für die Messung der Kopplung verwendet wird. Es ist bevorzugt, dass dieser auf einer zweiten Baugruppe einmal vorhanden ist, da sich mehrere gleichzeitige Aussendungen meist gegenseitig stören.

Schutz wird außerdem für ein Verfahren zum Betrieb einer ersten Baugruppe einer erfindungsgemäßen Bewegungsvorrichtung beansprucht, wobei unter Verwendung wenigstens eines ersten Feldwechselwirkungsmittels ein Messanforderungssignal an die zweite Baugruppe gesendet wird, wobei danach ein an wenigstens einem ersten Feldwechselwirkungsmittel anliegendes erstes Empfangssignal jeweils gesondert gemessen wird, wobei die entsprechende Signalauswertung aller ersten Empfangssignale zusammen genommen mehrere zeitlich aufeinander folgende Hauptphasen umfasst, wobei zeitlich aufeinanderfolgenden Hauptphasen unterschiedlichen zweiten Feldwechselwirkungsmittel zugeordnet sind.

In den verschiedenen Hauptphasen senden vorzugsweise verschiedene zweite Feldwechselwirkungsmittel gemäß dem unten erläuterten Verfahren Felder aus. Nach einem Neustart der Bewegungsvorrichtung, also zu einem Zeitpunkt, an dem die Position der zweiten Baugruppe nicht bekannt ist, wird vorzugsweise von mehreren ersten Feldwechselwirkungsmitteln nacheinander das Messanforderungssignal ausgesendet, so lange, bis die gewünschte zweite Baugruppe auf dieses Messanforderungssignal reagiert. Aus dem letztlich benutzten ersten Feldwechselwirkungsmittel lässt sich bereits eine grobe Position der zweiten Baugruppe ableiten, die als Startwert für die weitere iterative Positionsberechnung nutzbar ist. Im laufenden Betrieb, in dem die Position der zweiten Baugruppe aus einer zeitlich vorhergehenden Positionsbestimmung näherungsweise bekannt ist, wird zum Aussenden des Messanforderungssignals vorzugsweise dasjenige erste Feldwechselwirkungsmittel ausgewählt, bei dem ein besonders guter Empfang an den zweiten Feldwechselwirkungsmitteln zu erwarten ist. Die zeitliche Dauer der ersten Hauptphasen ist vorzugsweise fest vorgegeben. Sie ist vorzugsweise so kurz gewählt, dass während einer Hauptphase allenfalls eine vernachlässigbare Relativverlagerung zwischen erster und zweiter Baugruppe stattfindet.

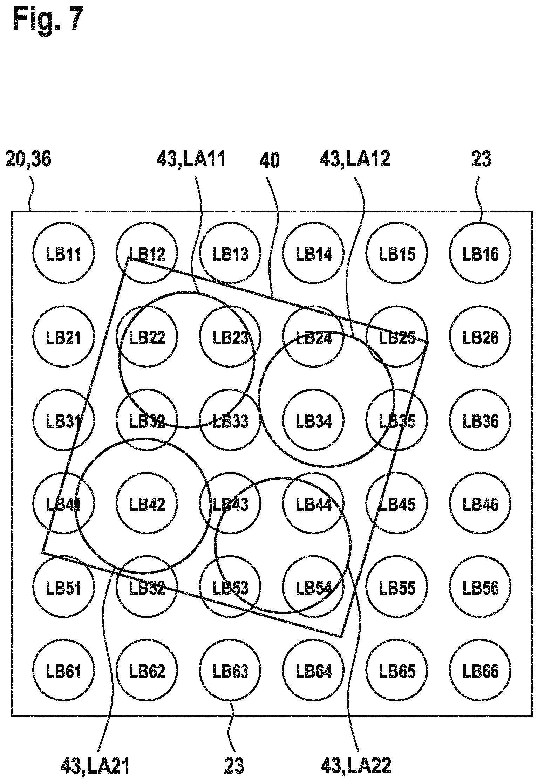

Für die Signalauswertung werden vorzugsweise nur diejenigen ersten Empfangssignale derjenigen ersten Feldwechselwirkungsmittel herangezogen, die im Bereich der beweglichen Baugruppe angeordnet sind, was unten mit Bezug auf Fig. 7 näher erläutert ist. Für die entsprechende Auswahl wird vorzugsweise die in einem unmittelbar vorhergehenden Durchlauf ermittelte Position der zweiten Baugruppe herangezogen. Die genannten ersten Empfangssignale können nacheinander oder gleichzeitig ausgewertet werden, wobei beliebige Mischformen denkbar sind. Die o.g. Hauptphasen beziehen sich auf die Signalauswertung als Ganzes. Der Fall, dass ein bestimmtes erstes Feldwechselwirkungsmittel in zwei verschiedenen Hauptphasen ausgewertet wird, tritt prinzipbedingt eher selten auf. Innerhalb einer Hauptphase kann die Auswertung der betreffenden ersten Feldwechselwirkungsmittel gleichzeitig oder nacheinander erfolgen, wobei auch Mischformen denkbar sind.

Es versteht sich, dass anstelle des vorgeschlagenen Zeitmultiplexverfahrens mit mehreren Hauptphasen, das besonders einfach und kostengünstig zu realisieren ist, auch andere Multiplexverfahren zum Einsatz kommen können. Bei einem Frequenzmultiplexverfahren können beispielsweise verschiedene zweite Feldwechselwirkungsmittel gleichzeitig auf unterschiedlichen Frequenzen senden, so dass sich die Messdauer verkürzen würde. Derartige komplexe Multiplexverfahren haben jedoch den Nachteil, dass sich die Aufbaukomplexität würde.

Das Messanforderungssignal ist vorzugsweise digital codiert. Mit der entsprechenden Codierung kann im Falle mehrerer zweiter Baugruppen für jede zweite Baugruppe ein eindeutiges Messanforderungssignal verwendet werden, so dass nur die gewünschte zweite Baugruppe auf das Messanforderungssignal reagiert. Im Rahmen der genannten digitalen Codierung können Codesymbole verwendet werden, die mehr als zwei Zustände codieren, wobei die entsprechende Anzahl vorzugsweise eine ganzzahlige Potenz von zwei ist.

Es kann vorgesehen sein, dass in jeder Hauptphase einerseits eine Messung der Amplitude des ersten Empfangssignals stattfindet, wobei andererseits eine digitale Information aus dem ersten Empfangssignal decodiert wird. Vorzugsweise geschieht die Messung der Kupplung und die digitale Datenübertragung zeitlich nacheinander, so dass die Kopplung besonders genau gemessen werden kann, wobei die Messung überdies sehr einfach ist.

Die zeitliche Dauer der entsprechenden Unterphasen ist vorzugsweise fest vorgegeben. Vorzugsweise findet die digitale Datenübertragung zeitlich nach der Messung der Amplitude statt. Hierdurch kann der Beginn der digitalen Signalübertragung einfacher festgestellt werden. Die genannte digitale Information umfasst vorzugsweise eine Information darüber, welches zweite Feldwechselwirkungsmittel das betreffende Feld erzeugt hat. Sofern mehrere zweite Baugruppen zum Einsatz kommen, hat jedes einzelne zweite Feldwechselwirkungsmittel aus der entsprechenden Gesamtheit aller zweiten Feldwechselwirkungsmittel aller zweiten Baugruppen jeweils eine eindeutige Kennung. Damit kann beispielsweise festgestellt werden, ob die korrekte zweite Baugruppe auf das Messanforderungssignal geantwortet hat.

Die digitale Information kann in Form einer Amplitudenumtastung bzw. ASK (https://de.wikipedia.org/wiki/Amplitudenumtastung) codiert sein, insbesondere in Form eines On-Off-Keyings. Anstelle dieser besonders einfachen Codierung können auch aufwändigere Codierungen, beispielsweise PSK, FSK oder QAM zur Anwendung kommen. Die Verwendung des Frequenzy Shift Keyings (FSK) ist im Rahmen der vorliegenden Erfindung besonders vorteilhaft, da hier ein Signal verwendet wird, dessen Amplitude zeitlich konstant ist, wobei sich nur dessen Frequenz ändert. Bei Verwendung dieser Modulation ist es somit möglich, die Messung der Kopplung und die Übertragung der digitalen Information gleichzeitig vorzunehmen, so dass sich die Messdauer verkürzt. Besonders bevorzugt sind dabei FSK-Verfahren, wie beispielsweise das FT8-Verfahren (https://physics.princeton.edu/pulsar/kljt/Work_the_World_part2.pdf), die einen besonders kleinen Frequenzhub aufweisen und dabei trotzdem außerordentlich störunempfindlich sind. Dabei versteht es sich, dass der Frequenzhub vorzugsweise umso größer ist, je kürzer die gewünschte Messdauer ist. Im Rahmen der genannten digitalen Codierungen können Codesymbole verwendet werden, die mehr als zwei Zustände codieren, wobei die entsprechende Anzahl vorzugsweise eine ganzzahlige Potenz von zwei ist.

Es ist denkbar, dass zwischen den genannten Hauptphasen weitere digitale Informationen zwischen der ersten und der zweiten Baugruppe ausgetauscht werden, also sowohl von der ersten zur zweiten Baugruppe als auch in umgekehrter Richtung. Dabei kommen vorzugsweise die vorstehend erläuterten Codierverfahren zum Einsatz.

Es kann vorgesehen sein, dass nachdem alle Hauptphasen durchlaufen sind, eine Relativposition zwischen erster und zweiter Baugruppe mittels eines interativen Optimierungsverfahrens berechnet wird, wobei wenigstens sechs, vorzugsweise wenigstens acht, erste Empfangssignale berücksichtigt werden. Als iteratives Optimierungsverfahren kommt vorzugsweise das Gradientenverfahren (https://de.wikipedia.org/wiki/Gradientenverfahren) zur Anwendung.

Schutz wird weiter für ein Verfahren zum Betrieb einer zweiten Baugruppe einer erfindungsgemäßen Bewegungsvorrichtung beansprucht, wobei sich einer Wartephase mehrere Hauptphasen zeitlich anschließen, wobei in der Wartephase ein zweites Empfangssignal wenigstens eines zweiten Feldwechselwirkungsmittels daraufhin ausgewertet wird, ob das für die betreffende zweite Baugruppe bestimmte Messanforderungssignal vorliegt, wobei abgewartet wird, bis dieses vorliegt, wobei in jeder Hauptphase jeweils zumindest zeitweilig ein zweites Sendesignal an jeweils ein anderes zweites Feldwechselwirkungsmittel angelegt wird, welches jeweils eine vorgegebene, konstante Amplitude aufweist.

Vorzugsweise hat das zweite Sendesignal eine konstante Frequenz, um die Messung der Kopplung zu vereinfachen. Die Messung der Kopplung findet vorzugsweise statt, wenn das zweite Sendesignal anliegt. Nachdem alle Hauptphasen durchlaufen sind, wird das vorstehende Verfahren vorzugsweise erneut beginnend mit der Wartephase durchgeführt, so dass es in der Art einer Endlosschleife abläuft.

Zeitlich vor oder nach dem zweiten Sendesignal kann ein drittes Sendesignal an das betreffende zweite Feldwechselwirkungsmittel angelegt werden, welches eine digitale Information codiert, die vorzugsweise eine eindeutige Kennung des betreffenden zweiten Feldwechselwirkungsmittels umfasst. Es ist aber auch denkbar, dass das zweite Sendesignal diese digitale Information codiert, wobei vorzugsweise ein FSK-Verfahren zum Einsatz kommt.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine grobschematische Seitenansicht einer erfindungsgemäßen Bewegungsvorrichtung;
- Fig. 2: eine grobschematische perspektivische Ansicht eines ersten Substrats einer Unterbaugruppe und eines zweiten Substrats;
- Fig. 3a: eine Draufsicht einer ersten Spulenlage eines ersten bzw. zweiten Feldwechselwirkungsmittels, welches als planare Spule ausgebildet ist;
- Fig. 3b: die zu Fig. 3a gehörende zweite Spulenlage;
- Fig. 4a: eine Draufsicht einer alternativen Ausführungsform einer ersten Spulenlage eines ersten bzw. zweiten Feldwechselwirkungsmittels, welche als planare Spule ausgebildet ist;
- Fig. 4b: die zu Fig. 4a gehörige zweite Spulenlage;
- Fig. 5: einen Schaltplan der ersten und der zweiten Elektronikbaugruppe;
- Fig. 6: ein Diagramm betreffend die Kopplung;
- Fig. 7: eine grobschematische Draufsicht der Bewegungsvorrichtung;
- Fig. 8: eine grobschematische Draufsicht einer ersten Alternative für eine Unterbaugruppe der erste Baugruppe;
- Fig. 9: eine grobschematische Draufsicht einer zweiten Alternative für eine Unterbaugruppe der erste Baugruppe; und
- Fig. 10: eine grobschematische Draufsicht zweier zweiter Baugruppen, die über ein Gelenk miteinander verbunden sind.

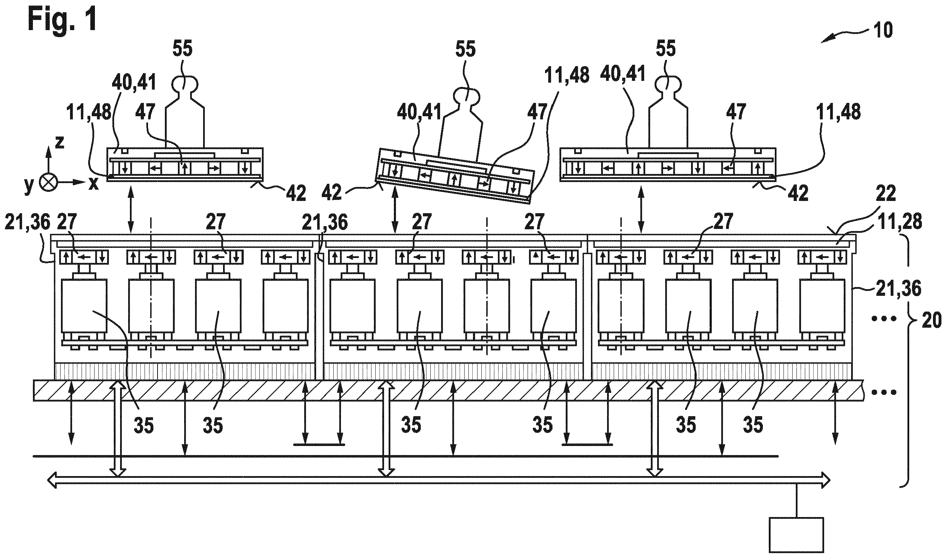

Fig. 1 zeigt eine grobschematische Schnittansicht einer erfindungsgemäßen Bewegungsvorrichtung 10. Die Bewegungsvorrichtung 10 umfasst vorliegend eine einzige erste und drei zweite Baugruppen 20; 40, wobei die erste Baugruppe 20 in der Art eines ortsfesten Stators ausgeführt ist, wobei die zweite Baugruppe 40 in der Art eines beweglichen Werkstückträgers ausgeführt ist. Der Stator ist typischerweise bezüglich seiner ersten Bewegungsoberfläche 22 wesentlich größer als der Werkstückträger ausgeführt. Die Zuordnung von erster und zweiter Baugruppe zu Stator und Werkstückträger kann auch umgekehrt gewählt werden. Die vom Stator verschiedene Baugruppe kann ein- oder mehrfach vorhanden sein. Die erste Baugruppe 20 ist vorliegend aus mehreren Unterbaugruppen 36 zusammengesetzt, die untereinander im Wesentlichen identisch ausgebildet sind, wobei sie gemeinsam die ebene erste Bewegungsoberfläche 22 bilden.

Die erste Baugruppe 20 umfasst eine erste Basis 21, die vorliegend in der Art eines allseits geschlossenen Gehäuses ausgebildet ist. Vorliegend bildet die Oberseite der Basis 21 eine geschlossene, ebene erste Bewegungsoberfläche 22, entlang derer die zweiten Baugruppen 40 frei schwebend bewegbar sind. Vorliegend ist die erste Bewegungsoberfläche 22 senkrecht zur Richtung der Schwerkraft ausgerichtet, wobei die Ausrichtung frei wählbar ist. Insbesondere kann die Anordnung nach Fig. 1 um 180° gedreht über Kopf betrieben werden. Die erste Bewegungsoberfläche 22 kann weitgehend beliebig gekrümmt im Raum verlaufen, wobei sie vorzugsweise eben ist.

Innerhalb der ersten Basis 21 sind mehrere erste Permanentmagnetanordnungen 27 angeordnet, die jeweils über einen zugeordneten Aktuator 35 mit der ersten Basis 21 verbunden sind. Die ersten Permanentmagnetanordnungen 27 sind untereinander identisch ausgeführt und umfassen jeweils drei Einzelmagnete, die parallel zur ersten Bewegungsoberfläche 22 in einer Reihe nebeneinander angeordnet sind. Die ersten Einzelmagnete haben jeweils ein Magnetfeld, welches demjenigen eines magnetischen Dipols zumindest in einiger Entfernung nahe kommt. Die entsprechenden Dipolvektoren sind in der Art eines Halbach-Arrays angeordnet, so dass sich zur zweiten Baugruppe 40 hin ein besonders starkes Magnetfeld ergibt. Der Abstand einer ersten Permanentmagnetanordnung 27 zur ersten Bewegungsoberfläche 22 ist bei allen ersten Permanentmagnetanordnungen 27 jeweils gleich gewählt und vorzugsweise möglichst klein.

Die Aktuatoren 35 sind vorliegend als Elektromotoren, insbesondere als bürstenlose Gleichstrommotoren, ausgebildet. Sie haben dementsprechend einen einzigen endlosen Drehfreiheitsgrad, wobei die entsprechende Drehachse senkrecht zur ersten Bewegungsoberfläche 22 ausgerichtet ist. Die Antriebswelle des Elektromotors ist fest mit den zugeordneten Einzelmagneten verbunden, so dass diese eine im Wesentlichen starre Einheit bilden, die als Ganzes bezüglich der betreffenden Drehachse drehbar ist. Die Drehachse ist in der Mitte der zugeordneten ersten Permanentmagnetanordnung 27 angeordnet.

Die erste Baugruppe 20 umfasst vorzugsweise eine Vielzahl von ersten Permanentmagnetanordnungen 27 mit zugeordneten Aktuatoren 35, die in einem flächigen Raster verteilt über die erste Bewegungsoberfläche 22 angeordnet sind. Die Teilungsabstände dieses Rasters sind vorzugsweise gleichförmig ausgeführt.

Der ersten Baugruppe 20 ist ein rechtwinkliges Koordinatensystem zugeordnet, dessen X- und Y-Achse parallel zur ersten Bewegungsoberfläche 22 ausgerichtet ist, wobei dessen Z-Achse senkrecht zur ersten Bewegungsoberfläche 22 ausgerichtet ist. Entgegen der Darstellung liegt der Nullpunkt vorzugsweise in der ersten Bewegungsoberfläche 22.

Die zweite Baugruppe 40 ist in der Art eines Werkstückträgers ausgeführt. Sie umfasst eine zweite Basis 41, die vorliegend in Form einer ebenen Platte mit konstanter Dicke ausgeführt ist, wobei sie eine ebene Ober- und eine ebene Unterseite hat. Die Oberseite dient zur Aufnahme einer Nutzlast 55, wobei sie weitgehend beliebig gestaltet werden kann. Die der ersten Baugruppe 20 zugewandte Unterseite bildet eine zweite Bewegungsoberfläche 42, die an die erste Bewegungsoberfläche 22 angepasst ist, wobei es insbesondere möglich sein soll, die zweite Bewegungsoberfläche 42 zur unmittelbaren Anlage mit der ersten Bewegungsoberfläche 22 zu bringen, so dass die zweite Baugruppe 40 stabil auf der ersten Baugruppe 20 aufliegt, insbesondere im stromlosen Zustand der Bewegungsvorrichtung 10.

Vorliegend hat die zweite Basis 41 in der Draufsicht einen quadratischen Umriss, wobei auch rechteckige, kreisrunde oder beliebige andere Umrisse denkbar sind. Die zweite Baugruppe 40 umfasst eine zweite Permanentmagnetanordnung 47, welche fest relativ zur zweiten Basis 41 angeordnet ist. Die zweite Permanentmagnetanordnung 47 umfasst mehrere zweite Einzelmagnete, deren Magnetfeld demjenigen eines magnetischen Dipols zumindest in einiger Entfernung nahe kommt. Die genannten Einzelmagnete sind möglichst nahe benachbart zur Unterseite bzw. zur zweiten Bewegungsoberfläche 42 angeordnet, so dass zu den ersten Permanentmagnetanordnungen 27 hin starke Magnetkräfte einstellbar sind.

Weiter umfasst die Bewegungsvorrichtung 10 ein Positionsbestimmungssystem 11, das teilweise in der ersten und teilweise in der zweiten Baugruppe 20; 40 angeordnet ist. Insbesondere umfasst die erste Baugruppe 20 ein erstes Substrat 28, wobei die zweite Baugruppe 40 eine zweites Substrat 48 umfasst.

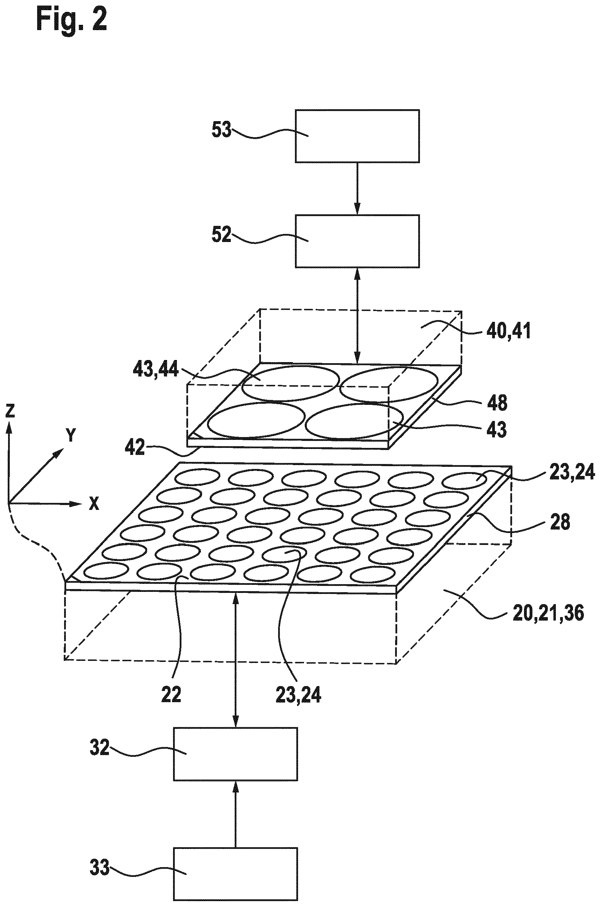

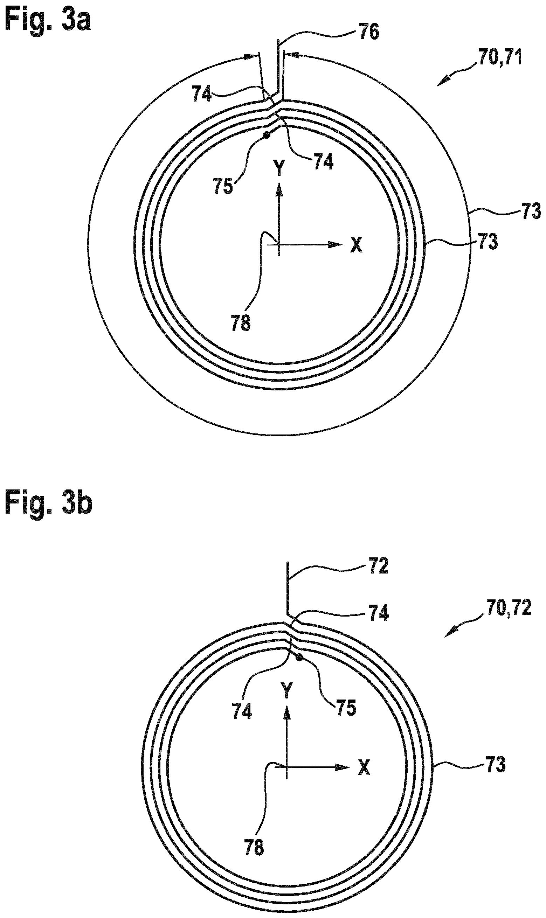

Fig. 2 zeigt eine grobschematische perspektivische Ansicht eines ersten Substrats 28 einer Unterbaugruppe 36 und eines zweiten Substrats 48. Bei dem ersten und dem zweiten Substrat 28; 48 handelt es sich vorzugsweise um eine Leiterplatte, die mittels eines photochemischen Ätzverfahrens hergestellt ist. Die Leiterplatte umfasst jeweils ein elektrisch isolierendes Grundmaterial, bei dem es sich beispielsweise um glasfaserverstärktes Epoxidharz handeln kann. Auf dieses ist eine elektrisch leitfähige Schicht, insbesondere eine Kupferschicht, aufgebracht, die mit dem genannten photochemischen Ätzverfahren so strukturiert ist, dass sie beispielsweise die spulenförmigen Leiterbahnen gemäß Fig. 3a oder 3b bildet. Dabei können mehrere gesonderte übereinander gelegene elektrisch leitfähige Schichten vorgesehen sein, die durch Isolierschichten voneinander getrennt sind. An definierten Punkten, den sog. Durchkontaktierungen, besteht eine elektrische Verbindung zwischen Leiterbahnen der verschiedenen elektrisch leitfähigen Schichten. Die entsprechenden ersten bzw. zweiten Feldwechselwirkungsmittel 23; 43 sind in Fig. 2 entsprechend ihrer bevorzugten Kreisform als perspektivisch verzerrte Kreise dargestellt. Als äußerste Lage hat die Leiterplatte vorzugsweise eine elektrisch isolierende Deckschicht, die unmittelbar die erste Bewegungsoberfläche 22 bilden kann. Es ist aber auch denkbar, dass die Leiterplatte mit einer zusätzlichen, mechanischen widerstandsfähigeren Deckschicht versehen ist, welche beispielsweise aus einem nichtmagnetischen Stahlblech oder aus einem Aluminiumblech besteht.

Die ersten Feldwechselwirkungsmittel 23 sind entsprechend einem quadratischen Raster verteilt über das erste Substrat 28 angeordnet. Die beiden orthogonalen Achsen dieses Rasters definieren eine X- und eine Y-Achse. Die Teilung des Rasters in beide Achsrichtungen X, Y ist entsprechend der Kreisform der ersten Feldwechselwirkungsmittel 23 gleich ausgeführt. Das erste Substrat 28 ist an der Oberseite der betreffenden Unterbaugruppe 36 fest angebracht, wobei die verbleibende Unterbaugruppe 36 in Fig. 2 mit Strichlinien angedeutet ist.

Die ersten Feldwechselwirkungsmittel 23 sind alle jeweils einzeln an eine erste Elektronikbaugruppe 32 angeschlossen. Diese wird vorzugsweise von einer gesonderten Leiterplatte gebildet, welche innerhalb der Unterbaugruppe 36 fest aufgenommen ist. Die erste Elektronikbaugruppe 32 kann auch Funktionseinheiten umfassen, die zur Ansteuerung der Aktuatoren (Nr. 35 in Fig. 1) dienen.

Die erste Elektronikbaugruppe 32 ist an eine erste Energieversorgung 33 angeschlossen. Nachdem die erste Baugruppe 20 vorzugsweise als unbeweglicher Stator eingesetzt wird, handelt es sich hierbei vorzugsweise um eine Versorgung aus dem öffentlichen Stromnetz, welche beispielsweise wenigstens ein Schaltnetzteil umfasst. Alle Unterbaugruppen 36 können eine gemeinsame erste Energieversorgung 33 aufweisen.

Das zweite Substrat 48 ist analog zum ersten Substrat 28 aufgebaut. Es ist ebenfalls in Form einer Leiterplatte ausgebildet. Die entsprechenden zweiten Feldwechselwirkungsmittel 43 sind ebenfalls als kreisförmige, planare Spulen ausgebildet, die in einem quadratischen Raster angeordnet sind. Deren Durchmesser ist jedoch größer gewählt, als derjenige der ersten Feldwechselwirkungsmittel, da hierdurch die Messdauer verkürzt bzw. die Messfrequenz erhöht werden kann. Die zweiten Feldwechselwirkungsmittel 43 werden vorzugsweise nacheinander zeitlich angesteuert, wohingegen das Empfangssignal an den ersten Feldwechselwirkungsmittel 23 zeitlich parallel ausgewertet wird. Dementsprechend ist es vorteilhaft, die Anzahl der zweiten Feldwechselwirkungsmittel 43 zu minimieren. Mit der gezeigten Ausführung sind dennoch in jeder Stellung der Bewegungsvorrichtung genügend Paare von ersten und zweiten Feldwechselwirkungsmitteln 23; 43 vorhanden, um eine Positionsbestimmung in sechs Freiheitsgraden zu ermöglichen.

Die zweiten Feldwechselwirkungsmittel 43 sind alle jeweils einzeln an eine zweite Elektronikbaugruppe 52 angeschlossen. Diese wird von einer zweiten Energieversorgung 53 mit elektrischem Strom versorgt. Die beiden Baugruppen 52; 53 sind Bestandteil der zweiten Baugruppe 40, wobei sie dort fest eingebaut sind. Das zweite Substrat 48 ist Bestandteil der zweiten Basis 41, wobei die verbleibende zweite Basis in Fig. 2 mit Strichlinien angedeutet ist.

Die zweite Baugruppe 40 soll vorzugsweise frei schweben, weshalb die zweite Energieversorgung 53 vorzugsweise ohne Kabelverbindung zur Umgebung auskommt. Die zweite Energieversorgung 53 umfasst vorzugsweise einen elektrischen Energiespeicher, insbesondere einen Akkumulator und/oder einen Kondensator. Der elektrische Energiespeicher kann während kurzer Zeitspannen kabelgebunden geladen werden. Vorzugsweise kommt jedoch eine drahtlose Ladetechnik zum Einsatz, die beispielsweise gemäß dem Qi-Standard (https://de.wikipedia.org/wiki/Qi(induktive Energie%C3%BCbertragung) ausgeführt sein kann. Es ist denkbar, die ersten und die zweiten Feldwechselwirkungsmittel im Rahmen dieser drahtlosen Ladetechnik zu verwenden. Die zweite Energieversorgung 53 kann Solarzellen umfassen.

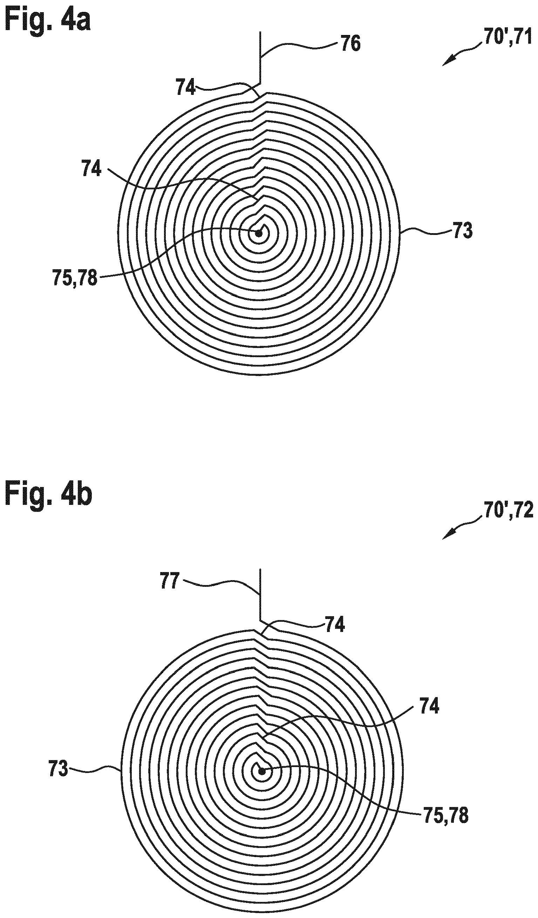

Fig. 3a zeigt eine Draufsicht einer ersten Spulenlage 71 eines ersten bzw. zweiten Feldwechselwirkungsmittels, welches als planare Spule 70 ausgebildet ist. Die erste Spulenlage 71 umfasst vorliegend vier Windungsumläufe, wobei deren Anzahl beliebig variiert werden kann, um günstige elektrische Eigenschaften zu erhalten. Jeder Windungsumlauf umfasst einen bezüglich einem gemeinsamen Spulenmittelpunkt 78 kreisförmigen Windungsabschnitt 73. Dieser erstreckt sich vorzugsweise über mehr als 340° des Umfangs. Unmittelbar benachbarte Windungsumläufe sind mit einem schräg verlaufenden Verbindungsabschnitt elektrisch miteinander verbunden. Am freien Ende des äußersten Windungsumlaufs ist ein erster Anschluss 76 vorgesehen, über welchen die Spule an die zugeordnete erste bzw. zweite Elektronikbaugruppe (Nr. 32; 52 in Fig. 4) angeschlossen wird. Am freien Ende des innersten Windungsumlaufs ist eine Durchkontaktierung 75 vorgesehen, über welche die erste Spulenlage 71 mit der zugeordneten zweiten Spulenlage (Nr. 72 in Fig. 3b) elektrisch leitend verbunden ist. Die dieser Spule 70 zugeordnete Wechselwirkungsfläche ist durch eine Schraffur gekennzeichnet.

Fig. 3b zeigt die der Fig. 3a zugeordnete zweite Spulenlage 72. Diese hat vorliegend ebenfalls vier bezüglich dem gemeinsamen Spulenmittelpunkt 78 kreisförmige Windungsabschnitte. Der größte Windungsdurchmesser ist gleich demjenigen der ersten Spulenlage gewählt. Unmittelbar benachbarte Windungsumläufe sind mit einem schrägen Verbindungsabschnitt 74 elektrisch leitend miteinander verbunden. Die Verbindungsabschnitte der ersten und der zweiten Spulenlage haben eine entgegengesetzte Neigungsrichtung, so dass die Richtung des Stromflusses in der ersten und der zweiten Spulenlage gleich ist. Am freien Ende des äußersten Windungsumlaufs ist ein zweiter Anschluss 77 vorgesehen, über welchen die Spule an die zugeordnete erste bzw. zweite Elektronikbaugruppe (Nr. 32; 52 in Fig. 4) angeschlossen wird. Am freien Ende des innersten Windungsumlaufs ist eine Durchkontaktierung 75 vorgesehen, die deckungsgleich mit der Durchkontaktierung in Fig. 3a ist. Im Ergebnis besteht eine elektrisch leitende Verbindung vom ersten Anschluss über die zugeordneten Windungsumläufe der ersten Spulenlage, weiter über die Durchkontaktierung, weiter über die Windungsumläufe der zweiten Spulenlage zum zweiten Anschluss. In allen genannten Windungsumläufen ist die Richtung des Stromflusses gleich, so dass die vorliegende Spule insgesamt acht Windungsumläufe aufweist.

Fig. 4a zeigt eine Draufsicht einer alternativen Ausführungsform 70' einer ersten Spulenlage 71 eines ersten bzw. zweiten Feldwechselwirkungsmittels, welche als planare Spule ausgebildet ist. Fig. 4b zeigt die zu Fig. 4a gehörige zweite Spulenlage. Die alternative Ausführungsform ist bis auf die nachfolgend erläuterten Unterschiede identisch zur Ausführungsform nach Fig. 3a und 3b ausgebildet, so dass auf die entsprechenden Ausführungen verwiesen wird.

Bei der alternativen Ausführungsform 70' wurde die Anzahl der Windungsumläufe bei gleichbleibendem Außendurchmesser so weit erhöht, dass die Durchkontaktierung 75 deckungsgleich mit dem Spulenmittelpunkt 78 ist. Die alternative Ausführungsform 70' hat dementsprechend besonders viele Windungsumläufe. Sie kann folglich ein starkes magnetisches Feld erzeugen bzw. sehr empfindlich auf das empfangende magnetische Feld reagieren.

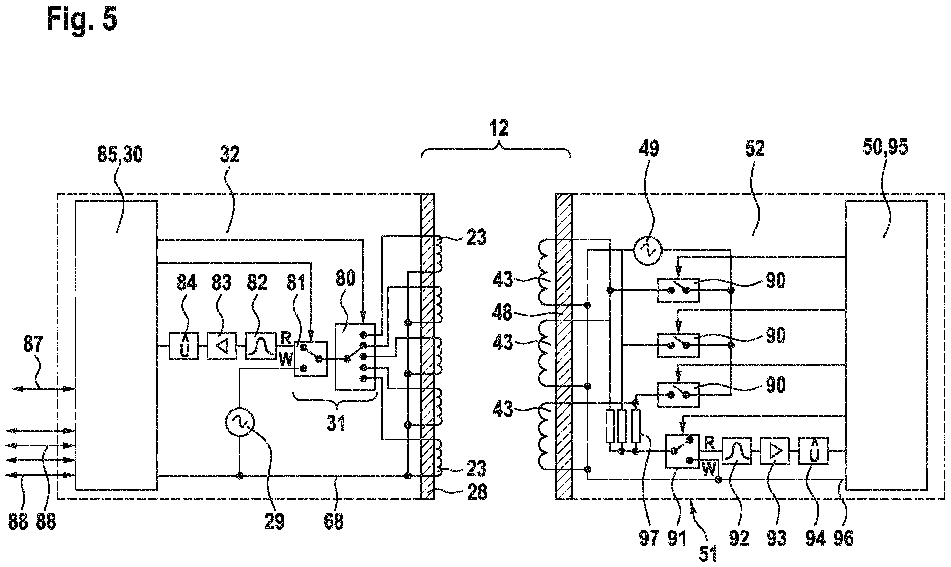

Fig. 5 zeigt einen Schaltplan der ersten und der zweiten Elektronikbaugruppe 32; 52. Diese Schaltung ist daraufhin optimiert, dass sie im Rahmen eines Prototyps besonders einfach und schnell umsetzbar ist.

Die erste Elektronikbaugruppe 32 umfasst einen ersten Mikrocontroller 85. Dieser ist über eine erste Schnittstelle 87 mit einer zentralen Steuerung verbunden. Weiter sind mehrere zweite Schnittstellen 88 vorgesehen, über welche er jeweils mit einer unmittelbar benachbarten Unterbaugruppe verbunden ist. Unter Verwendung des ersten Mikrocontrollers 85 können alle ersten Feldwechselwirkungsmittel 23 jeweils für sich genommen mit einem Sendesignal beaufschlagt werden. Darüber hinaus kann das entsprechende Empfangssignal ausgewertet werden. Der Übersichtlichkeit halber sind nur fünf erste Feldwechselwirkungsmittel 23 dargestellt, wobei typischerweise erheblich mehr erste Feldwechselwirkungsmittel 23 vorhanden sind, in Fig. 2 beispielsweise 36 Stück.

Die ersten Feldwechselwirkungsmittel 23 sind unmittelbar an einen ersten Multiplexer 31 angeschlossen, welcher einen ersten und einen zweiten Analogschalter 80; 81 umfasst. Deren Schaltzustand wird vom ersten Mikrocontroller 85 gesteuert. Mit dem ersten Analogschalter 80 kann ausgewählt werden, welches erste Feldwechselwirkungsmittel 23 verwendet wird. Der erste Analogschalter 80 ist unmittelbar dem zweiten Analogschalter 81 verbunden. Mit letztgenanntem kann ausgewählt werden, ob das gewählte erste Feldwechselwirkungsmittel 23 im Sende- oder im Empfangsbetrieb verwendet wird.

Im Sendebetrieb ist der erste Signalgenerator 29 über den W-Eingang des zweiten Analogschalters 81 mit einem zugeordneten ersten Feldwechselwirkungsmittel 23 verbunden. Bei dem ersten Signalgenerator 29 handelt es sich vorzugsweise um einen Sinus-Generator, der beispielsweise mit einer Frequenz zwischen 1 MHz und 50 MHz betrieben wird, wobei vorzugsweise eine Frequenz verwendet wird, die in ein ISM-Band fällt.

Im Empfangsbetrieb ist das ausgewählte erste Feldwechselwirkungsmittel 23 über den R-Anschluss des zweiten Analogschalters 81 weiter über eine Filterstufe 82, einen Verstärker 83 und einem Messgleichrichter 84 an einen Analogeingang des ersten Mikrocontrollers 85 angeschlossen. Bei der Filterstufe handelt sich vorzugsweise um einen Bandpassfilter, dessen Mittelfrequenz entsprechend der Sendefrequenz der zweiten Baugruppe gewählt ist. Der Messgleichrichter 84 umfasst neben einem Gleichrichter vorzugsweise einen Tiefpassfilter, so dass an dessen Ausgang ein Signal anliegt, welches proportional zur Amplitude des Empfangssignals am ausgewählten ersten Feldwechselwirkungsmittel 23 ist. Der Messgleichrichter 84 ist so ausgelegt, dass er schnell auf Amplitudenänderungen anspricht. Dem genannten Analogeingang ist vorzugsweise ein Analog-Digital-Wandler zugeordnet, welcher Bestandteil des ersten Mikrocontrollers 85 ist. Die Funktionen zur Filterung und Gleichrichtung können auch durch Signalverarbeitungsalgorithmen im Mikrokontroller realisiert sein. Der erste Mikrocontroller 85 bildet dementsprechend die erste Signalauswerteeinheit 30.

Die zweite Elektronikbaugruppe 52 ist analog zur ersten Elektronikbaugruppe 32 ausgeführt. Die zweiten Feldwechselwirkungsmittel 43 stehen den ersten Feldwechselwirkungsmitteln 23 im Betrieb über einen Feldraum 12 gegenüber, der typischerweise mit Luft oder Vakuum gefüllt ist. Die relative magnetische Permeabilität des Feldraums 12 beträgt daher näherungsweise Eins. Der zweite Mikrocontroller 95 bildet die zweite Signalauswerteeinheit 50.

Bei der Gestaltung des zweiten Multiplexers 51 wurde dem Umstand Rechnung getragen, dass nur vergleichsweise wenige zweite Feldwechselwirkungsmittel 43 vorhanden sind, die überdies gleichzeitig im Empfangsbetrieb arbeiten sollen, um das Messanforderungssignal zu empfangen. Den zweiten Feldwechselwirkungsmitteln 43 wurde jeweils ein gesonderter dritter Analogschalter 90 zugeordnet, bei dem es sich um einen einfachen Ein-Aus-Schalter handelt, der jeweils eine Verbindung zum zweiten Signalgenerator 49 schaltet. Der vierte Analogschalter 91 entspricht dem zweiten Analogschalter 81 mit dem Unterschied, dass wahlweise eine Verbindung zur Masse 96 oder zum zweiten Mikrocontroller 95 hin geschaltet wird.

Hinzuweisen ist auf die Messwiderstände 97, die jeweils einem zugeordneten Feldwechselwirkungsmittel 43 parallel geschaltet sind, wobei permanent eine Verbindung der parallel geschalteten zweiten Feldwechselwirkungsmittel 43 zum vierten Analogschalter 91 vorhanden ist. Die Messwiderstände sind insbesondere dann wirksam, wenn alle dritten Analogschalter 90 offen sind, wobei am vierten Analogschalter 91 die Verbindung zum zweiten Mikrocontroller 95 geschaltet ist. Dann liegt am Analogeingang des zweiten Mikrocontrollers 95 im Wesentlichen das gemittelte Empfangssignal aller zweiten Feldwechselwirkungsmitteln 43 an. Damit kann im Wesentlichen die gesamte zweite Bewegungsoberfläche zum Empfang des Messanforderungssignals ausgenutzt werden.

Der zweite und die dritten Analogschalter 81; 90 können darüber hinaus dazu verwendet werden, eine digitale Information auf das jeweilige Sendesignal im Sinne eines On-Off-Keyings aufzumodulieren. Im Rahmen des Messanforderungssignals kann hierdurch mit der gewünschten zweiten Baugruppe kommuniziert werden. Im Rahmen einer Hauptphase kann eine eindeutige Kennnummer desjenigen zweiten Feldwechselwirkungsmittels übertragen werden, welches das betreffende Sendesignal ausgesendet hat. Weiter kann die vorstehend erläuterte Sendespannung von der zweiten Baugruppe an die erste Baugruppe übermittelt werden.

Fig. 6 zeigt ein Diagramm betreffend die Kopplung K. Dieses Diagramm kann durch Feldberechnung oder Messung ermittelt werden. Im Rahmen der Positionsbestimmung wird der entsprechende Zusammenhang verwendet, wobei er beispielsweise in Form einer Wertetabelle gespeichert ist, aus der im Rahmen der Positionsberechnungen Zwischenwerte interpoliert werden.

An der horizontalen Achse ist der in die XY-Ebene projizierte Abstand r_{xy} der Mittelpunkte (Nr. 78 in Fig. 3a) eines Paars aus einem ersten und einem zweiten Feldwechselwirkungsmittel aufgetragen. In der Vertikalen ist die Kopplung K aufgetragen, die im Rahmen der vorliegenden Erfindung gemessen wird. Unter der Kopplung K soll dabei insbesondere der Quotient aus der Amplitude der an den ersten Feldwechselwirkungsmitteln anliegenden Empfangsspannungen und der Amplitude der an den zweiten Feldwechselwirkungsmitteln anliegenden Sendespannungen verstanden werden.

Die verschiedenen dargestellten Kurven sind jeweils einem festen auf die Z-Achse projizierten Abstand r_{z} der Mittelpunkte (Nr. 78 in Fig. 3a) des genannten Paars aus einem ersten und einem zweiten Feldwechselwirkungsmittel zugeordnet. Die Kurve mit dem niedrigsten Abstand r_{z} ist mit Nr. 100 gekennzeichnet, diejenige mit dem höchsten Abstand mit Nr. 101.

Insgesamt repräsentiert dieses Diagramm eine Gleichung mit zwei Unbekannten r_{xy} und r_{z}. Diese Gleichung hängt aufgrund der bevorzugten rotationsymmetrischen Gestaltung von erster und zweiter Feldwechselwirkungsfläche nur von zwei Parametern ab. Im Rahmen der Positionsbestimmung soll vorzugsweise eine Position in sechs räumlichen Freiheitsgranden berechnet werden. Aus dieser Position können für alle denkbaren Paare von einem ersten und einem zweiten Feldwechselwirkungsmittel die Parameter r_{xy} und r_{z} berechnet werden, da die Positionen der ersten und der zweiten Feldwechselwirkungsmittel auf der jeweils zugeordneten ersten bzw. zweiten Baugruppe bekannt sind. Diese liegen vorzugsweise in der Form eines geometrischen Modells vor. Wenn man nun für wenigstens sechs derartige Paare die Kopplung misst, erhält man unter Verwendung des Zusammenhangs nach Fig. 6 ein nichtlineares Gleichungssystem, welches sich mit iterativen Verfahren, beispielsweise mit dem Gradientenverfahren (https://de.wikipedia.org/wiki/Gradientenverfahren) lösen lässt. Dabei ist klar, dass die Positionsbestimmung umso zuverlässiger und genauer ist, je mehr Kopplungen gemessen werden. An dieser Stelle ist anzumerken, dass die genannten Lösungsverfahren typischerweise Optimierungsverfahren sind, bei denen ein Fehlerparameter optimiert, insbesondere minimiert, wird. Für deren Ausführbarkeit kommt es folglich nicht drauf an, dass eine exakte Lösung des nichtlinearen Gleichungssystems gefunden wird. In der Folge stören Messungenauigkeiten bei der Messung der Kopplung K wenig. Diese können vielmehr durch Messung möglichst vieler Kopplungen K minimiert werden. Das Gleichungssystem umfasst dann mehr Gleichungen als zur Lösung theoretisch notwendig wären.

Fig. 7 zeigt eine grobschematische Draufsicht der Bewegungsvorrichtung 10. Zu erkennen ist eine Unterbaugruppe 36 der ersten Baugruppe 20. Diese hat insgesamt 36 erste Feldwechselwirkungsmittel 23, die jeweils mit LBxx eindeutig gekennzeichnet sind. Weiter ist eine zweite Baugruppe 40 gezeigt, die insgesamt vier zweite Feldwechselwirkungsmittel 43 aufweist, die jeweils mit LAxx eindeutig gekennzeichnet sind. Für die Positionsbestimmung werden vorzugsweise nur die Paare von ersten und zweiten Feldwechselwirkungsmitteln verwendet, bei den sich eine starke Kopplung ergibt, die sich also in der in Z-Richtung betrachteten Draufsicht zumindest teilweise überlappen. In der gezeigten Stellung würde man also folgende Paare für die Positionsbestimmung heranziehen:
in der ersten Hauptphase:
   LA11 - LB22; LA11 - LB23; LA11 - LB32; LA11 - LB33
in der zweiten Hauptphase:
   LA12 - LB24; LA12 - LB25; LA12 - LB34; LA12 - LB35
in der dritten Hauptphase:
   LA21 - LB32; LA21 - LB41; LA21 - LB42; LA21 - LB43; LA21 - LB52
in der vierten Hauptphase:
   LA22 - LB43; LA22 - LB44; LA22 - LB53; LA22 - LB54

Vorliegend stehen also insgesamt 17 Paare von ersten und zweiten Feldwechselwirkungsmitteln 23; 43 zur Verfügung, die eine starke Kopplung aufweisen, die für die Positionsbestimmung geeignet ist. Dies sind deutlich mehr als die theoretisch erforderlichen sechs Paare.

Aus der Fig. 7 ergibt sich darüber hinaus, dass die bewegliche zweite Baugruppe 40 nur mit sehr wenigen zweiten Feldwechselwirkungsmitteln 43 versehen sein braucht, wenn diese nur genügend groß sind. Für die Anzahl der sich ergebenden Paare kommt es vielmehr darauf an, dass die ersten Feldwechselwirkungsmittel 23 gegenüber den zweiten Feldwechselwirkungsmitteln 43 genügend klein sind. An dieser Stelle ist darauf hinzuweisen, dass das Empfangssignal an den ersten Feldwechselwirkungsmitteln 23 problemlos parallel ausgewertet werden kann, ohne dass die Positionsbestimmung nachteilig beeinflusst wird. Das Sendesignal an den zweiten Feldwechselwirkungsmitteln 43 wird demgegenüber vorzugsweise nacheinander angelegt.

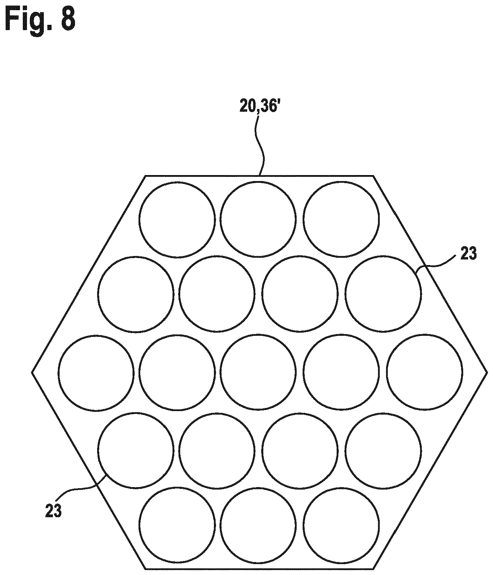

Fig. 8 zeigt eine grobschematische Draufsicht einer ersten Alternative 36' für eine Unterbaugruppe der ersten Baugruppe 20. Diese hat in der Draufsicht den Umriss eines regelmäßigen Sechsecks, so dass die Unterbaugruppen 36' lückenlos aneinander gebaut werden können. Die ersten Feldwechselwirkungsmittel 23 sind entsprechend einem regelmäßigen hexagonalen Raster verteilt angeordnet, so dass die ersten Bewegungsoberflächen über alle Unterbaugruppen 36' hinweg lückenlos überdecken. Die ersten Feldwechselwirkungsmittel 23 sind untereinander identisch ausgebildet, wobei die entsprechende erste Wechselwirkungsfläche insbesondere kreisförmig ausgebildet ist.

Es versteht sich, dass diese hexagonale Anordnung auch für die zweiten Feldwechselwirkungsmittel an der zweiten Baugruppe verwendbar ist.

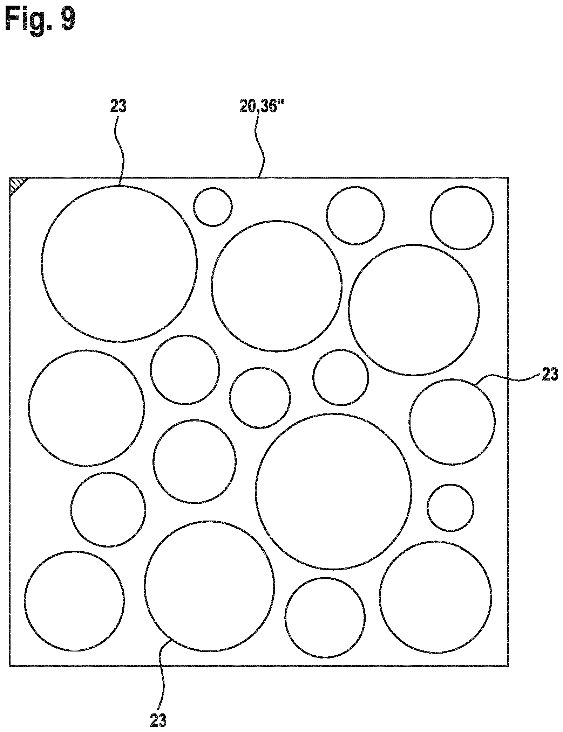

Fig. 9 zeigt eine grobschematische Draufsicht einer zweiten Alternative 36" für eine Unterbaugruppe der ersten Baugruppe 20. Bei dieser Ausführungsform sind die ersten Feldwechselwirkungsmittel 23 völlig unregelmäßig verteilt über die erste Bewegungsoberfläche angeordnet. Sie sind jeweils rotationssymmetrisch bzw. kreisförmig ausgebildet, so dass der mit Bezug auf Fig. 6 erläuterte Zusammenhang weiterhin Gültigkeit hat.

Für die Positionsbestimmung kommt es nicht darauf an, dass die ersten bzw. zweiten Feldwechselwirkungsmittel regelmäßig verteilt angeordnet oder gleich ausgebildet sind. Es ist ausreichend, wenn deren jeweilige Position auf der ersten bzw. zweiten Bewegungsoberfläche und deren Größe bzw. Durchmesser bekannt ist.

Es versteht sich, dass diese unregelmäßige Anordnung auch für die zweiten Feldwechselwirkungsmittel an der zweiten Baugruppe verwendbar ist.

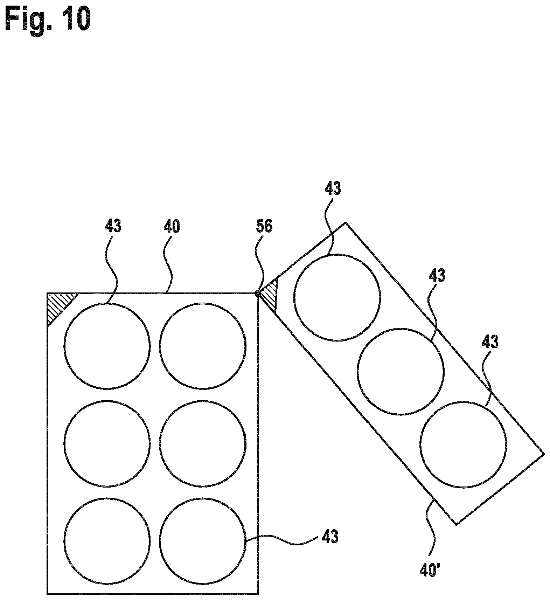

Fig. 10 zeigt eine grobschematische Draufsicht zweier zweiter Baugruppen 40; 40', die über ein Gelenk 56 miteinander verbunden sind. Ein Vorteil des erfindungsgemäßen Positionsmesssystems besteht darin, das auch mehrere bewegliche Baugruppen 40; 40' verwendbar sind, wobei die Position einer jeder dieser zweiten Baugruppen 40; 40' in sechs Freiheitsgraden bestimmbar ist. Bei der Lösung des oben erläuterten nichtlinearen Gleichungssystems kann das Gelenk 56 im Rahmen des geometrischen Modells berücksichtigt werden.

### Bezugszeichen

- Z: Achse senkrecht zur ersten Bewegungsoberfläche
- X: Achse die in die erste Bewegungsoberfläche fällt und senkrecht zu Z-Achse steht
- Y: Achse senkrecht zur X- und zur Z-Achse

- 10: Bewegungsvorrichtung
- 11: Positionsbestimmungssystem
- 12: Feldraum

- 20: erste Baugruppe
- 21: erste Basis
- 22: erste Bewegungsoberfläche
- 23: erstes Feldwechselwirkungsmittel
- 24: erste Wechselwirkungsfläche
- 27: erste Permanentmagnetanordnung
- 28: erstes Substrat
- 29: erster Signalgenerator
- 30: erste Signalauswerteeinheit
- 31: erster Multiplexer
- 32: erste Elektronikbaugruppe
- 33: erste Energieversorgung
- 35: Aktuator
- 36: Unterbaugruppe
- 36': Unterbaugruppe (erste Alternative)
- 36": Unterbaugruppe (zweite Alternative)
- 40: zweite Baugruppe
- 40': weitere zweite Baugruppe
- 41: zweite Basis
- 42: zweite Bewegungsoberfläche
- 43: zweites Feldwechselwirkungsmittel
- 44: zweite Wechselwirkungsfläche
- 47: zweite Permanentmagnetanordnung
- 48: zweites Substrat
- 49: zweiter Signalgenerator
- 50: zweite Signalauswerteeinheit
- 51: zweiter Multiplexer
- 52: zweite Elektronikbaugruppe
- 53: zweite Energieversorgung
- 55: Nutzlast
- 56: Gelenk

- 70: planare Spule
- 70': planare Spule (alternative Ausführungsform)
- 71: erste Spulenlage
- 72: zweite Spulenlage
- 73: kreisförmiger Windungsabschnitt
- 74: Verbindungsabschnitt
- 75: Durchkontaktierung
- 76: erster Anschluss
- 77: zweiter Anschluss
- 78: Spulenmittelpunkt
- 80: erster Analogschalter
- 81: zweiter Analogschalter
- 82: Filterstufe
- 83: Verstärker
- 84: Messgleichrichter
- 85: erster Mikrocontroller
- 86: Masse
- 87: erste Schnittstelle zur zentralen Steuerung
- 88: zweite Schnittstelle zu einer unmittelbar benachbarten ersten Elektronikbaugruppe

- 90: dritter Analogschalter
- 91: vierter Analogschalter
- 92: Filterstufe
- 93: Verstärker
- 94: Messgleichrichter
- 95: zweiter Mikrocontroller
- 96: Masse
- 97: Messwiderstand

- 100: Kurve mit dem niedrigsten Abstand r_{z}
- 101: Kurve mit dem höchsten Abstand r_{z}

## Patentansprüche

1. Bewegungsvorrichtung (10) mit einem Positionsbestimmungssystem (11), umfassend eine erste Baugruppe (20) mit einer ersten Bewegungsoberfläche (22) und eine gesonderte zweite Baugruppe (40) mit einer zweiten Bewegungsoberfläche (42), welche gegenüberliegend zur ersten Bewegungsoberfläche (22) angeordnet ist, wobei die zweite Baugruppe (40) beweglich relativ zur ersten Baugruppe (20) ist, wobei die erste Baugruppe (20) eine Vielzahl von planaren ersten Feldwechselwirkungsmitteln (23) umfasst, welche flächig verteilt über die erste Bewegungsoberfläche (22) und parallel zu dieser angeordnet sind, wobei sie jeweils eine erste Wechselwirkungsfläche (24) definieren, wobei die zweite Baugruppe (40) eine Vielzahl von zweiten Feldwechselwirkungsmitteln (43) umfasst, wobei die ersten und die zweiten Feldwechselwirkungsmittel (23; 43) in elektromagnetische Wechselwirkung bringbar sind, wobei jeweils eine über das entsprechende Feld vermittelte Kopplung messbar ist, wobei diese Kopplungen bei der Ermittlung der Relativposition zwischen erster und zweiter Baugruppe (20; 40) berücksichtigt werden, wobei die zweiten Feldwechselwirkungsmittel (43) jeweils planar ausgeführt sind, wobei sie flächig verteilt über die zweite Bewegungsoberfläche (42) und parallel zu dieser angeordnet sind, wobei sie jeweils eine zweite Wechselwirkungsfläche (44) definieren
**dadurch gekennzeichnet, dass** die erste Baugruppe (20) unbeweglich ist, wobei die zweiten Wechselwirkungsflächen (44) größer als die ersten Wechselwirkungsflächen (24) ausgebildet sind.

2. Bewegungsvorrichtung nach Anspruch 1,
wobei die ersten und die zweiten Feldwechselwirkungsmittel (23; 43) von planaren Spulen gebildet werden.

3. Bewegungsvorrichtung nach einem der vorstehenden Ansprüche,
wobei die ersten und die zweiten Wechselwirkungsflächen (24; 44) so angeordnet sind, dass in jeder Relativstellung zwischen einer ersten und einer zweiten Baugruppe (20; 40), in welcher die zweite Bewegungsoberfläche (42) unmittelbar an der ersten Bewegungsoberfläche (22) anliegt, wenigstens sechs Paare, vorzugsweise wenigstens acht Paare, von sich zumindest teilweise überlappenden ersten und zweiten Wechselwirkungsflächen (24; 44) vorhanden sind, wobei für jedes dieser Paare die entsprechende Kopplung messbar ist.

4. Bewegungsvorrichtung nach einem der vorstehenden Ansprüche,
wobei die erste Baugruppe (20) eine erste Basis (21) und mehrere erste Permanentmagnetanordnungen (27) umfasst, wobei die ersten Permanentmagnetanordnungen (27) über einen jeweils zugeordneten Aktuator (35) mit der ersten Basis (21) derart verbunden sind, dass sie jeweils als Ganzes in wenigstens einem Freiheitsgrad mittels des jeweils zugeordneten Aktuators (35) bewegbar relativ zur ersten Basis (21) sind, wobei die zweite Baugruppe (40) eine zweite Basis (41) und eine zweite Permanentmagnetanordnung (47) umfasst, wobei die zweite Permanentmagnetanordnung (47) ortsfest relativ zur zweiten Basis (41) angeordnet ist.

5. Bewegungsvorrichtung nach einem der vorstehenden Ansprüche,
wobei die ersten und/oder die zweiten Wechselwirkungsflächen (24; 44) kreisförmig ausgebildet sind.

6. Bewegungsvorrichtung nach einem der vorstehenden Ansprüche,
wobei die ersten Feldwechselwirkungsmittel (23) untereinander identisch ausgebildet sind, wobei sie gemäß einem quadratischen oder einem hexagonalen Raster verteilt angeordnet sind, wobei die zweiten Feldwechselwirkungsmittel (43) untereinander identisch ausgebildet sind, wobei sie gemäß einem quadratischen oder einem hexagonalen Raster verteilt angeordnet sind.

7. Bewegungsvorrichtung nach einem der vorstehenden Ansprüche,
wobei die erste Baugruppe (20) wenigstens einen ersten Signalgenerator (29), wenigstens eine erste Signalauswerteeinheit (30) und wenigstens einen ersten Multiplexer (31) umfasst, wobei die ersten Feldwechselwirkungsmittel (23) über einen zugeordneten ersten Multiplexer (31) einzeln wahlweise entweder an einen zugeordneten ersten Signalgenerator (29) oder eine zugeordnete erste Signalauswerteinheit (30) anschließbar sind.

8. Bewegungsvorrichtung nach Anspruch 7,
wobei die erste Baugruppe (20) aus mehreren Unterbaugruppen (36; 36'; 36") zusammengesetzt ist, die jeweils einen Teil der ersten Bewegungsoberfläche (22) mit den dortigen ersten Feldwechselwirkungsmitteln (23) bilden, wobei jeder Unterbaugruppe ein erster Signalgenerator (29), wenigstens eine erste Signalauswerteinheit (30) und ein erster Multiplexer (31) zugeordnet ist.

9. Bewegungsvorrichtung nach Anspruch 8,
wobei die zweite Baugruppe (40) jeweils einen zweiten Signalgenerator (49), eine zweite Signalauswerteeinheit (50) und einen zweiten Multiplexer (51) umfasst, wobei die zweiten Feldwechselwirkungsmittel (43) über den zweiten Multiplexer (51) einzeln wahlweise entweder an den zweiten Signalgenerator (49) oder an die zweite Signalauswerteinheit (50) anschließbar sind.

10. Verfahren, wobei eine Bewegungsvorrichtung (10) nach einem der vorstehenden Ansprüche verwendet wird, wobei unter Verwendung wenigstens eines ersten Feldwechselwirkungsmittels (23) ein Messanforderungssignal an die zweite Baugruppe (40) gesendet wird, wobei danach ein an wenigstens einem ersten Feldwechselwirkungsmittel (23) anliegendes erstes Empfangssignal jeweils gesondert gemessen wird, wobei die entsprechende Signalauswertung aller ersten Empfangssignale zusammen genommen mehrere zeitlich aufeinander folgende Hauptphasen umfasst, wobei zeitlich aufeinanderfolgenden Hauptphasen unterschiedliche zweite Feldwechselwirkungsmittel (23) zugeordnet sind.

11. Verfahren nach Anspruch 10,
wobei in jeder Hauptphase einerseits eine Messung der Amplitude des ersten Empfangssignals stattfindet, wobei andererseits eine digitale Information aus dem ersten Empfangssignal decodiert wird.

12. Verfahren nach Anspruch 10 oder 11,
wobei nachdem alle Hauptphasen durchlaufen sind, eine Relativposition zwischen erster und zweiter Baugruppe mittels eines interativen Optimierungsverfahrens berechnet wird, wobei wenigstens sechs, vorzugsweise wenigstens acht, erste Empfangssignale berücksichtigt werden.

13. Verwendung einer Bewegungsvorrichtung (10) nach einem der Ansprüche 1 bis 9, wobei die Verwendung ein Verfahren zum Betrieb einer zweiten Baugruppe (40) der Bewegungsvorrichtung (10) umfasst, wobei sich einer Wartephase mehrere Hauptphasen zeitlich anschließen, wobei in der Wartephase ein zweites Empfangssignal wenigstens eines zweiten Feldwechselwirkungsmittels (43) daraufhin ausgewertet wird, ob das für die betreffende zweite Baugruppe (40) bestimmte Messanforderungssignal vorliegt, wobei abgewartet wird, bis dieses vorliegt, wobei in jeder Hauptphase jeweils zumindest zeitweilig ein zweites Sendesignal an jeweils ein anderes zweites Feldwechselwirkungsmittel (43) angelegt wird, welches jeweils eine vorgegebene, konstante Amplitude aufweist.

## Claims

1. Movement device (10) having a position determination system (11), comprising a first assembly (20) with a first movement surface (22) and a separate second assembly (40) with a second movement surface (42), which is arranged opposite the first movement surface (22), wherein the second assembly (40) is movable relative to the first assembly (20), wherein the first assembly (20) comprises a large number of planar first field interaction means (23), which are distributed flat over the first movement surface (22) and arranged parallel to the latter, wherein they each define a first interaction surface (24), wherein the second assembly (40) comprises a large number of second field interaction means (43), wherein the first and the second field interaction means (23; 43) can be brought into electromagnetic interaction, wherein, in each case, a coupling mediated via the corresponding field can be measured, wherein these couplings are taken into account during the determination of the relative position between the first and second assembly (20; 40), wherein the second field interaction means (43) are each of planar design, wherein they are distributed flat over the second movement surface (42) and arranged parallel to the latter, wherein they each define a second interaction surface (44),
**characterized in that**
the first assembly (20) is immovable, wherein the second interaction surfaces (44) are designed to be larger than the first interaction surfaces (24).

2. Movement device according to Claim 1,
wherein the first and the second field interaction means (23; 43) are formed by planar coils.

3. Movement device according to one of the preceding claims,
wherein the first and the second interaction surfaces (24; 44) are arranged such that, in each relative position between a first and a second assembly (20; 40) in which the second movement surface (42) rests directly on the first movement surface (22), there are at least six pairs, preferably at least eight pairs, of at least partly overlapping first and second interaction surfaces (24; 44), wherein the corresponding coupling can be measured for each of these pairs.

4. Movement device according to one of the preceding claims,
wherein the first assembly (20) comprises a first base (21) and a plurality of first permanent magnet arrangements (27), wherein the first permanent magnet arrangements (27) are connected to the first base (21) via a respectively associated actuator (35) in such a way that, in each case as a whole, they are movable relative to the first base (21) in at least one degree of freedom by means of the respectively associated actuator (35), wherein the second assembly (40) comprises a second base (41) and a second permanent magnet arrangement (47), wherein the second permanent magnet arrangement (47) is arranged to be stationary relative to the second base (41).

5. Movement device according to one of the preceding claims,
wherein the first and/or the second interaction surfaces (24; 44) are designed to be circular.

6. Movement device according to one of the preceding claims,
wherein the first field interaction means (23) are designed to be identical to one another, wherein they are arranged to be distributed according to a square or a hexagonal grid, wherein the second field interaction means (43) are designed to be identical to one another, wherein they are arranged to be distributed according to a square or a hexagonal grid.

7. Movement device according to one of the preceding claims,
wherein the first assembly (20) comprises at least one first signal generator (29), at least one first signal evaluation unit (30) and at least one first multiplexer (31), wherein the first field interaction means (23) can be optionally individually connected either to an associated first signal generator (29) or an associated first signal evaluation unit (30) via an associated first multiplexer (31).

8. Movement device according to Claim 7,
wherein the first assembly (20) is assembled from a plurality of subassemblies (36; 36'; 36"), which each form part of the first movement surface (22) with the first field interaction means (23) there, wherein each subassembly is assigned a first signal generator (29), at least one first signal evaluation unit (30) and a first multiplexer (31).

9. Movement device according to Claim 8,
wherein the second assembly (40) in each case comprises a second signal generator (49), a second signal evaluation unit (50) and a second multiplexer (51), wherein the second field interaction means (43) can be optionally individually connected either to the second signal generator (49) or to the second signal evaluation unit (50) via the second multiplexer (51).

10. Method, wherein a movement device (10) according to one of the preceding claims is used, wherein, by using at least one first field interaction means (23), a measurement request signal is transmitted to the second assembly (40), wherein, after that, a first received signal present on at least one first field interaction means (23) is in each case measured separately, wherein the corresponding signal evaluation of all the first received signals, taken together, comprises a plurality of chronologically successive main phases, wherein chronologically successive main phases are associated with different second field interaction means (23).

11. Method according to Claim 10,
wherein, in each main phase, firstly a measurement of the amplitude of the first received signal takes place, secondly an item of digital information being decoded from the first received signal.

12. Method according to Claim 10 or 11,
wherein, after all the main phases have been run through, a relative position between the first and second assembly is calculated by means of an interactive optimization method, wherein at least six, preferably at least eight, first received signals are taken into account.

13. Use of a movement device (10) according to one of Claims 1 to 9, wherein the use comprises a method for operating a second assembly (40) of the movement device (10),
wherein a wait phase is followed by a plurality of main phases chronologically, wherein, in the wait phase, a second received signal from at least one second field interaction means (43) is evaluated to see whether the measurement request signal intended for the relevant second assembly (40) is present, waiting until this is present, wherein, in each main phase, in each case at least temporarily, a second transmitted signal which, in each case, has a predefined constant amplitude, is applied to a respective other second field interaction means (43).

## Revendications

1. Dispositif de déplacement (10) comprenant un système de détermination de position (11), comportant un premier module (20) comprenant une première surface de déplacement (22) et un deuxième module (40) distinct comprenant une deuxième surface de déplacement (42), laquelle est disposée à l'opposé de la première surface de déplacement (22), le deuxième module (40) étant mobile par rapport au premier module (20), le premier module (20) comportant une pluralité de premiers moyens d'interaction de champ plans (23), lesquels sont disposés de manière répartie à plat au-dessus de la première surface de déplacement (22) et parallèlement à celle-ci, ceux-ci définissant respectivement une première surface d'interaction (24), le deuxième module (40) comportant une pluralité de deuxièmes moyens d'interaction de champ (43), les premiers et les deuxièmes moyens d'interaction de champ (23 ; 43) pouvant être amenés en interaction électromagnétique, un couplage communiqué par le biais du champ correspondant pouvant respectivement être mesuré, ces couplages étant pris en compte lors de l'identification de la position relative entre le premier et le deuxième module (20 ; 40), les deuxièmes moyens d'interaction de champ (43) étant respectivement réalisés plans, ceux-ci étant disposés de manière répartie à plat au-dessus de la deuxième surface de déplacement (42) et parallèlement à celle-ci, ceux-ci définissant respectivement une deuxième surface d'interaction (44), **caractérisé en ce que** le premier module (20) est immobile, les deuxièmes surfaces d'interaction (44) étant configurées plus grandes que les premières surfaces d'interaction (24).

2. Dispositif de déplacement selon la revendication 1, les premiers et les deuxièmes moyens d'interaction de champ (23 ; 43) étant formés par des bobines planes.

3. Dispositif de déplacement selon l'une des revendications précédentes, les premières et les deuxièmes surfaces d'interaction (24 ; 44) étant disposées de telle sorte que dans chaque position relative entre un premier et un deuxième module (20 ; 40), dans laquelle la deuxième surface de déplacement (42) repose directement sur la première surface de déplacement (22), au moins six paires, de préférence au moins huit paires de premières et de deuxièmes surfaces d'interaction (24 ; 44) qui se chevauchent au moins partiellement sont présentes, le couplage correspondant pouvant être mesuré pour chacune de ces paires.

4. Dispositif de déplacement selon l'une des revendications précédentes, le premier module (20) comportant une première base (21) et plusieurs premiers arrangements d'aimants permanents (27), les premiers arrangements d'aimants permanents (27) étant reliés à la première base (21) respectivement par le biais d'un actionneur (35) associé de telle sorte qu'ils peuvent respectivement être déplacés en tant qu'ensemble par rapport à la première base (21) au moins avec un degré de liberté au moyen de l'actionneur (35) respectivement associé, le deuxième module (40) comportant une deuxième base (41) et un deuxième arrangement d'aimants permanents (47), le deuxième arrangement d'aimants permanents (47) étant disposé en position fixe par rapport à la deuxième base (41).

5. Dispositif de déplacement selon l'une des revendications précédentes, les premières et/ou les deuxièmes surfaces d'interaction (24 ; 44) étant configurées en forme de cercle.

6. Dispositif de déplacement selon l'une des revendications précédentes, les premiers moyens d'interaction de champ (23) étant de configuration identique entre eux, ceux-ci étant disposés de manière répartie selon une grille quadratique ou hexagonale, les deuxièmes moyens d'interaction de champ (43) étant de configuration identique entre eux, ceux-ci étant disposés de manière répartie selon une grille quadratique ou hexagonale.

7. Dispositif de déplacement selon l'une des revendications précédentes, le premier module (20) comportant au moins un premier générateur de signaux (29), au moins une première unité d'interprétation de signal (30) et au moins un premier multiplexeur (31), les premiers moyens d'interaction de champ (23) pouvant être raccordés par le biais d'un premier multiplexeur (31) associé individuellement au choix soit à un premier générateur de signaux (29) associé, soit à une première unité d'interprétation de signal (30) associée.

8. Dispositif de déplacement selon la revendication 7, le premier module (20) étant constitué de plusieurs sous-modules (36 ; 36' ; 36"), qui forment respectivement une partie de la première surface de déplacement (22) avec les premiers moyens d'interaction de champ (23) qui s'y trouvent, un premier générateur de signaux (29), au moins une première unité d'interprétation de signal (30) et un premier multiplexeur (31) étant associés à chaque sous-module.

9. Dispositif de déplacement selon la revendication 8, le deuxième module (40) comportant respectivement un deuxième générateur de signaux (49), une deuxième unité d'interprétation de signal (50) et un deuxième multiplexeur (51), les deuxièmes moyens d'interaction de champ (43) pouvant être raccordés par le biais du deuxième multiplexeur (51) individuellement au choix soit au deuxième générateur de signaux (49), soit à la deuxième unité d'interprétation de signal (50).

10. Procédé, un dispositif de déplacement (10) selon l'une des revendications précédentes étant utilisé, un signal de demande de mesure étant envoyé au deuxième module (40) en utilisant au moins un premier moyen d'interaction de champ (23), un premier signal reçu présent au niveau du premier moyen d'interaction de champ (23) étant ensuite mesuré respectivement séparément, l'interprétation de signal correspondante de tous les premiers signaux de réception pris ensemble comportant plusieurs phases principales qui se suivent chronologiquement, différents deuxièmes moyens d'interaction de champ (23) étant associés aux phases principales qui se suivent chronologiquement.

11. Procédé selon la revendication 10, dans chaque phase principale une mesure de l'amplitude du premier signal reçu étant effectuée d'un côté, une information numérique étant décodée à partir premier signal reçu d'un autre côté.

12. Procédé selon la revendication 10 ou 11, après le passage de toutes les phases principales, une position relative entre le premier et le deuxième module étant calculée au moyen d'un procédé d'optimisation itératif, au moins six, de préférence au moins huit premiers signaux reçus étant pris en compte.

13. Utilisation d'un dispositif de déplacement (10) selon l'une des revendications 1 à 9, l'utilisation comportant un procédé pour faire fonctionner un deuxième module (40) du dispositif de déplacement (10), plusieurs phases principales étant rattachées temporellement à une phase d'attente, un deuxième signal reçu d'au moins un deuxième moyen d'interaction de champ (43) étant interprété dans la phase d'attente afin de déterminer si le signal de demande de mesure donné pour le deuxième module (40) concerné est présent, une attente jusqu'à la présence de celui-ci ayant lieu, un deuxième signal d'émission étant appliqué dans chaque phase principale, respectivement au moins temporairement, respectivement à un autre deuxième moyen d'interaction de champ (43), lequel présente respectivement une amplitude prédéfinie constante.
